# EUROPEAN PATENT SPECIFICATION

(11) **EP 1 745 874 B1**
(45) Date of publication and mention of the grant of the patent: **08.09.2010**
(21) Application number: 05425522.9
(22) Date of filing: 21.07.2005
(51) Int. Cl.: B23B 31/00

(54) **Tool-clamping means for tool machines**
Werkzeug-Spannvorrichtung für Werkzeugmaschinen
Dispositif de verrouillage d'outil pour une machine-outil

(43) Date of publication of application: 24.01.2007
(73) Proprietor: MARIO PINTO S.p.A., 10135 Torino (IT)
(72) Inventor: Bronzino, Pier Domenico, 10040 Caprie (TO) (IT)
(74) Representative: Spandonari, Carlo

(56) References cited:
- EP-A- 1 358 960
- DE-A1- 10 340 164
- US-A1- 2005 129 477

## Description

The present invention relates to a tool-clamping system for machine tools, particularly lathes provided with motorized turrets comprising a spindle mountable on the machining turret of the machine tool, and a clamping device engageable within the spindle and shaped for receiving a tool removably inserted therein.

As known, spindles are designed in accordance with standardized rules and are generally provided with a tapering bore shaped for receiving a clamping device, e.g., a collet chuck, and with an internal screw thread engageable by a threaded nut for locking the collet chuck within the bore.

EP-A-1 358 960, which corresponds to the preamble of claim 1, describes a tool clamping system in which the collet chuck is subsituted by a tool-holding insert which is also suited for supporting a few types of tools which, due to their particular shape or size, cannot be mounted onto the spindle by means of the conventional collet chucks. The insert has a tapering neck engageable within the tapering bore of the spindle, as well as an axial hole into which the tool is insertable, which hole may have different diameters depending on the tool to be supported. The insert is also provided with a flange having a plane surface that is biased against an opposite plane surface formed on the spindle, by tightening screws which are inserted in longitudinal through holes formed in the flange and are screwed into corresponding threaded holes in the spinlde.

With the above system, the insert is driven to rotate by the spindle by friction engagement between the above, opposite plane surfaces. However, such driving system is affected by considerable restrictions in terms of maximum driving torque, because, with torque values exceeding a certain level, such as required for heavy machining with sizable tools, the friction between the opposite surfaces is not sufficient, so that, for such machining, special clamping devices must be used which, however, often have the drawback of being sizeable and awkward to be tightened.

Nevertheless, even in case of machining with low average torques, torque peaks may be reached higher than the maximum torque transmissible by friction, thereby causing the screws, which should only be subjected to tensile stress to press the friction surfaces one against the other, to be also subjected to shearing stress, which circumstance, as well known to the person skilled in the art, is undesirable and leads to structural breakdown in a short time.

Therefore, it is a main object of the present invention to provide a tool-clamping system of the above type which is improved to reliably and accurately transmit torques much higher than the known systems, thereby improving the reliability and the flexibility of the tool-clamping system to make the latter compatible with sizable tools for heavy machining, which require very high torques, while maintaining a high accuracy at in centering the tool within the spindle.

It is another object of the invention to provide a tool-clamping system as above having a small axial dimension.

It is a further object of the invention to provide a tool-clamping system as above having low manufactoring costs.

The above objects and other advantages which will better appear below are achieved by a tool-clamping system for machine tools having the features recited in claim 1, while the other claims state other advantageous, though secondary features of the invention.

The invention will be now described in more detail with reference to a preferred, non-exclusive embodiment shown by way of non limiting example in the attached drawings, wherein:
Fig. 1 is a view in axial cross-section of the tool-clamping system according to the invention in association with a general machine tool;
Fig. 2 is a view in cross-section along line II-II of Fig. 1, showing the tool-clamping system according to the invention.

With reference to the above Figures, the tool-clamping system is housed within a housing 10, which in the present description is intended to be incorporated within a general machine tool (not shown), such as a lathe provided with a motorized turret, and generally comprises a spindle 12 that is pivotally supported in housing 10 on rolling bearings 14, 16, as well as a tool-clamping device 18 insertable within the spindle.

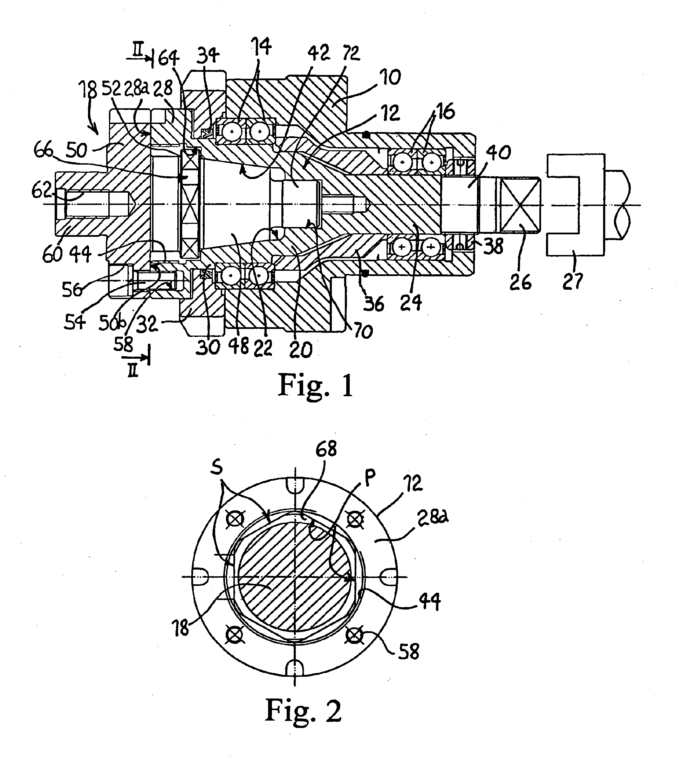

Spindle 12 has a main body 20 having an axial cavity 22 defined therein, which is open to an outer end of the spindle for receiving tool-clamping device 18 and is closed at it opposite end, as well as a shaft 24 which axially projects from main body 20 inward housing 10 and terminates with a profiled tang 26 for connection to a drive 27 (only diagrammatically shown in Fig. 1) of the machine tool, in a way known per se. On its side facing away from shaft 24, spindle 12 terminates with an annular flange 28 that is frontally provided with a finely worked, level face 28a. Spindle 12 has a shoulder 30 immediately upstream of annular flange 28. A collar 32 is arranged between annular flange 28 and housing 10, and is internally provided with a seal 34 that sealingly engages the cylindrical, lateral surface of shoulder 30. Bearings 14, 16 are mutually spaced via a spacer 36 and are axially clamped between shoulder 30 and a threaded nut 38 that is screwed to a threaded portion 40 formed on shaft 24 near profiled tang 26.

Axial cavity 22 has a tapering portion 42 and a threaded portion 44 at its open end.

Tool-clamping device 18 consists of an insert having a tapering portion 48, whose profile matches with tapering portion 42 to be received with a close fit therewithin, and an annular projection 50 connected to the larger-in-diameter section of tapering portion 48 via a connection, middle portion 52, which will be better described below. On its side facing tapering portion 48, annular projection 50 is provided with a second face 50b that is biased against first face 28a of spindle 12 by means of fastening screws 54 which are inserted in respective longitudinal, through holes 56 formed in annular projection 50 and are tightened into corresponding threaded holes 58 formed on annular flange 28 in positions aligned to through holes 56. A sleeve 60 projects axially from annular projection 50 on its side facing away from tapering portion 48, and has an axial, threaded blind hole 62 into which a general tool (not shown), such as a mill, or other similar tools, can be fastened.

According to this invention, between tapering portion 42 and threaded portion 44, axial cavity 22 is provided with an axial, shaped portion 64 having a hexagonal profile, which is engaged with a close fit by an axial, counter-shaped portion 66 of spindle 12 having a complementary hexagonal profile, for rotational coupling purposes. Having now particular reference to Fig. 2, the inner surface of axial cavity 22 is provided with six facets such as P extending along axial portion 64 and engaged with a close fit by corresponding facets such as S which are formed on an annular ridge 68 rising from middle portion 52 and integral therewith.

Advantageously, axial cavity 22 terminates, within the spindle, with a cylindrical, centering portion 70 which is adjacent to the smaller-in-diameter section of tapering portion 42 and is engaged by a complementary cylindrical portion 72 of the spindle, which axially extends from the smaller-in-diameter section of tapering portion 18.

Preferably, facets P on axial, shaped portion 64 of axial cavity 22 and corresponding facets S on axial, shaped portion 66 of spindle 12 are machined by milling after a hardening treatment upon spindle 12 and tool-clamping insert 18 respectively. This allows high coupling accuracy to be achieved, as well as high sturdiness.

Of course, it will be understood that the hexagonal profiles or generally polygonal profiles mentioned in the present description may have bevelled/chamfered corners, such as are necessarily generated during milling operations, particularly when machining hollow surfaces, such as axial cavity 22 of the spindle, as well known to the person skilled in the art. However, this does not detract from the effectiveness of the invention; in fact, absence of any sharp corners is actually desirable, particularly from the surface of the axial cavity, because it contributes to prevent formation of cracks even in case of high torques.

As it will be immediately understood by the person skilled in the art, driving by coupling between complementary, polygonal surfaces allows the tool-clamping system according to the invention to reliably and accurately transmit torques much higher than the systems of the prior art. In addition, with the tool-clamping system according to the invention, screws 54 do not run the risk of being subjected to tensile stress, as it may occur with the known tool-clamping systems, for instance in case of torque peaks. In fact, tightening annular projection 50 against annular flange 28 has the only aim of locking the insert in the axial direction within the spindle, in relation to a transverse, reference plan defined by their respective, opposite level surfaces abutted one against the other, while the driving action, as described above, is obtained by polygonal coupling.

A preferred embodiment of the invention has been described herein, but of course many changes may be made by a person skilled in the art, within the scope of the inventive concept. In particular, although in the example shown the spindle is coupled to the tool-clamping insert by mutual engagement of complementary, hexagonal profiles, of course other polygonal profiles may be used for their coupling, e.g., squared profiles, octagonal profiles, and the like, provided that they have at least one pair of complementary, mutually-engaged plane surfaces. However, polygonal profiles with a number of plane surfaces in the range 2 to 8 are believed to give better performance in terms of coupling accuracy. Furthermore, although in the above-described example the tool-clamping insert has an axial, threaded hole for a general tool, of course other systems can be envisaged for connecting the tool to the insert, as it will be evident to the person skilled in the art, which systems may be different depending on the size and type of tool.

## Claims

1. A tool-clamping system for machine tools, comprising
- a rotating spindle (12) mountable on the machine tool and having an axial cavity (22) provided with a tapering portion (42) for receiving a tool-clamping device (18), and
- a tool-clamping device comprising an insert (18) provided with a tapering neck (48) insertable with a close fit within the tapering portion (42) of the spindle, with an annular projection (50) having a first level surface (50b) extending at right angles to the rotation axis and biased by fastening means (54) against an opposite, second level surface (28a) defined on the spindle, and with tool-clamping means (62),
**characterized in that** said axial cavity (22) is provided with first facets (P) which are formed on the side of the larger end of the tapering portion (42) of the axial cavity (22) and are engaged with a close fit by corresponding second facets (S) on the outer surface of the insert (18) for rotational coupling purposes, as well as with a centering, cylindrical axial portion (70) which is formed on the side of the smaller end of the tapering portion (42) of the axial cavity and is engaged by a complementary, centering cylindrical portion (72) formed on the insert (18).

2. The system of claim 1, **characterized in that** said first facets (P) define an axial, shaped portion (64) having a polygonal profile within the axial cavity (22).

3. The system of claim 2, **characterized in that** said axial, shaped portion (64) has a hexagonal profile.

4. The system of any of claims 1 to 3, **characterized in that** said second facets (S) define an axial, counter-shaped portion (66) having a hexagonal profile on the spindle (12).

5. The system of any of claims 1-4, **characterized in that** said first facets and said second facets are machined by milling after a hardening treatment upon the spindle (12) and the insert (18) respectively.

## Patentansprüche

1. Werkzeugspannsystem für Werkzeugmaschinen, das die folgenden umfaßt:
- eine Drehspindel (12), die an die Werkzeugmaschine montierbar ist und eine axiale Aushöhlung (22) aufweist, welche mit einem konusförmigen Teil (42) zur Aufnahme einer Werkzeugspannvorrichtung (18) ausgerüstet ist, und
- eine Werkzeugspannvorrichtung, die aus einem Einsatzstück (18) besteht, das einen mit Festsitz in den konusförmigen Teil (42) der Drehspindel eingesetzbaren, konusförmigen Ansatz (48); einen ringförmigen Vorsprung (50), der eine erste, sich in rechtwinklig zur Drehachse erstreckende, ebene Oberfläche (50b) aufweist, und der durch Verbindungselemente (54) gegen eine zweite, gegenüberliegende, an der Drehspindel gebildete ebene Oberfläche (28a) gerichtet wird; und Werkzeugspannelementen (62) umfaßt,
**dadurch gekennzeichnet, daß** die genannte axiale Aushöhlung (22) mit ersten Abschrägungen (P) ausgestattet ist, die an der Seite des breiteren Endes des konusförmigen Teils (42) der axialen Aushöhlung (22) gebildet werden und mit Festsitz durch entsprechende zweite Abschrägungen (S) an der äußeren Oberfläche des Einsatzstücks (18) zu Drehkupplungszwecken einrasten, sowie ebenso mit einem zentrierenden, zylindrischen axialen Teil (70), der an der Seite des schmäleren Endes des konusförmigen Teils (42) der axialen Aushöhlung gebildet wird und durch einen zusätzliche, zentrierenden zylindrischen Teil (72), der am Einsatzstück (18) gebildet wird, einrastet.

2. System gemäß Anspruch 1, **dadurch gekennzeichnet, daß** die genannten ersten Abschrägungen (P) einen axialen, geformten Teil (64) bilden, der in der axialen Aushöhlung (22) ein polygonales Profil aufweist.

3. System gemäß Anspruch 2, **dadurch gekennzeichnet, daß** der genannte axiale, geformte Teil (64) ein sechseckiges Profil aufweist.

4. System gemäß einem beliebigen der Ansprüche 1 bis 3, **dadurch gekennzeichnet, daß** die genannten zweiten Abschrägungen (S) an der Drehspindel (12) einen axialen, gegengeformten Teil (66) bilden, welcher ein sechseckiges Profil hat.

5. System gemäß einem beliebigen der Ansprüche 1 bis 4, **dadurch gekennzeichnet, daß** die genannten ersten Abschrägungen und die genannten zweiten Abschrägungen nach einer Härtungsbehandlung mit einer Fräsmaschine jeweils an der Drehwelle (12) und dem Einsatzstück bearbeitet werden.

## Revendications

1. Système de verrouillage d'outil pour machines-outils, comprenant
- un mandrin rotatif (12) pouvant être monté sur la machine-outil et présentant une cavité axiale (22) dotée d'une partie tronconique (42) permettant d'accueillir un dispositif de verrouillage d'outil (18), et
- un dispositif de verrouillage d'outil comprenant un insert (18) doté d'un étranglement tronconique (48) pouvant être introduit par un ajustement serré dans la partie tronconique (42) du mandrin, avec une saillie annulaire (50) présentant une première surface plane (50b) s'étendant à angles droits par rapport à l'axe de rotation et bloquée par des moyens de fixation (54) contre une deuxième surface plane opposée (28a) définie sur le mandrin, et avec des moyens de verrouillage d'outil (62),
**caractérisé en ce que** ladite cavité axiale (22) est dotée de premières facettes (P) qui sont réalisées sur le côté de l'extrémité la plus grande de la partie tronconique (42) de la cavité axiale (22) et qui sont engagées par un ajustement sans jeu par des deuxièmes facettes correspondantes (S) sur la surface extérieure de l'insert (18) pour le couplage rotationnel, de même qu'avec une partie axiale cylindrique de centrage (70) qui est formée sur le côté de l'extrémité la plus petite de la partie tronconique (42) de la cavité axiale et est engagée par une partie cylindrique de centrage complémentaire (72) réalisée sur l'insert (18).

2. Système selon la revendication 1, **caractérisé en ce que** lesdites premières facettes (P) définissent une partie axiale en forme (64) présentant un profil polygonal dans la cavité axiale (22).

3. Système selon la revendication 2, **caractérisé en ce que** ladite partie axiale en forme (64) présente un profil hexagonal.

4. Système selon une quelconque des revendications 1 à 3, **caractérisé en ce que** lesdites deuxièmes facettes (S) définissent une partie axiale en contre-forme (66) présentant un profil hexagonal sur le mandrin (12).

5. Système selon une quelconque des revendications 1 à 4, **caractérisé en ce que** lesdites premières facettes et lesdites deuxièmes facettes sont usinées par fraisage après un traitement de durcissement respectivement sur le mandrin (12) et sur l'insert (18).
